# EUROPÄISCHE PATENTANMELDUNG

(11) **EP 1 122 981 A2**
(43) Veröffentlichungstag der Anmeldung: **08.08.2001**
(21) Anmeldenummer: 01101496.6
(22) Anmeldetag: 24.01.2001
(51) Int. Cl.: H05B 1/02, F27B 3/20, F27D 21/00

(54) **Anordnung zum Erkennen von Störungen in elektrischen Heizungen für Öfen, insbesondere Schmelz- und Sinteröfen**

(30) Priorität: 02.02.2000 DE 10004556
(71) Anmelder: ALD Vacuum Technologies AG, 63450 Hanau (DE)
(72) Erfinder: Dannehl, Gerhard, 61231 Bad Nauheim (DE); Felski, Peter, 63450 Hanau (DE)

(57) **Zusammenfassung**

Die Erfindung betrifft eine Anordnung zum Erkennen von Störungen in einer elektrischen Heizung. Diese Anordnung weist einen Regler auf, der während des noch nicht eingeschwungenen Temperaturzustands der Heizung die elektrische Leistungszufuhr zu der Heizung hochregelt. Ist der eingeschwungene Temperaturzustand erreicht, wird auf Konstantregelung umgeschaltet und Strom und Spannung an der Heizung überwacht. Übersteigt der Differenzbetrag zwischen einer vorgegebenen Spannung und der tatsächlichen Spannung bzw. zwischen einem vorgegebenen Strom und dem tatsächlichen Strom einen bestimmten Wert, wird ein Signal ausgelöst, das zur Überprüfung der Heizung bzw. zu einer Wartung auffordert.

## Beschreibung

Die Erfindung betrifft ein Verfahren nach dem Oberbegriff des Patentanspruchs 1.

Heizungen für Schmelzöfen bestehen oft aus Graphit, das im Laufe der Zeit abbrennt. Hierdurch entstehen zu hohe Heizleitertemperaturen, die das zu schmelzende Material überhitzen. Teure Chargen, z. B. Hartmetall-Sinterchargen, werden hierdurch beschädigt.

Der Erfindung liegt deshalb die Aufgabe zugrunde, ein Verfahren zu schaffen, mit dem es möglich ist, die vorstehend erwähnten Überhitzungen rechtzeitig zu erkennen und ihre negativen Folgen zu vermeiden.

Diese Aufgabe wird gemäß den Merkmalen des Patentanspruchs 1 gelöst.

Die Erfindung betrifft somit eine Anordnung zum Erkennen von Störungen in einer elektrischen Heizung. Diese Anordnung weist einen Regler auf, der während des noch nicht eingeschwungenen Temperaturzustands der Heizung die elektrische Leistungszufuhr zu der Heizung hochregelt. Ist der eingeschwungene Temperaturzustand erreicht, wird auf Konstantregelung umgeschaltet und Strom und Spannung an der Heizung überwacht. Übersteigt der Differenzbetrag zwischen einer vorgegebenen Spannung und der tatsächlichen Spannung bzw. zwischen einem vorgegebenen Strom und dem tatsächlichen Strom einen bestimmten Wert, wird ein Signal ausgelöst, das zur Überprüfung der Heizung bzw. zu einer Wartung auffordert.

Der mit der Erfindung erzielte Vorteil besteht insbesondere darin, dass die Beschädigung teurer Chargen vermieden wird.

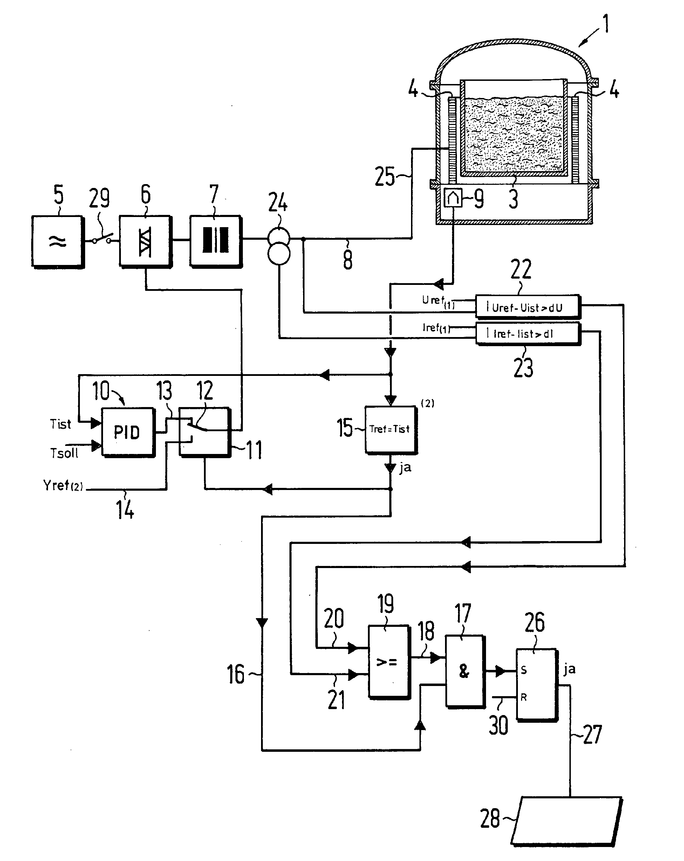

Ein Ausführungsbeispiel der Erfindung ist in der Zeichnung dargestellt und wird im Folgenden näher beschrieben.

Die einzige Figur zeigt einen Ofen 1, in dem Metall 2 in einem Behälter 3 geschmolzen werden kann, und zwar vorzugsweise mittels einer Graphitheizung 4. Diese Graphitheizung 4 wird aus einer Wechselstromquelle 5 mit elektrischer Energie versorgt, wobei diese elektrische Energie mittels eines Thyristorstellers 6 steuerbar ist. Die vom Thyristorsteller 6 kommende Spannung wird mittels eines Heizungstransformators 7 auf eine geeignete Spannung heruntertransformiert, sodass ein relativ hoher Strom über die Leitung 8 zur Graphitheizung 4 fließen kann.

Die an der Graphitheizung 4 herrschende Temperatur wird von einem Temperaturfühler 9 erfasst und auf einen Temperaturregler 10 gegeben. Bei diesem Temperaturregler 10 handelt es sich vorzugsweise um einen PID-Regler, dem neben dem Temperatur-Ist-Wert Tᵢₛₜ auch ein Temperatur-Sollwert Tₛₒₗₗ zugeführt wird. Dem Temperaturregler 10 ist ein Umschalter 11 nachgeschaltet, der mit dem Thyristorsteller 6 in Verbindung steht. Der Umschalter 11 kann mittels eines Schalters 12 zwischen zwei Anschlüssen 13, 14 umgeschaltet werden, wobei der eine Anschluss 13 mit dem Ausgang des Temperaturreglers 10 identisch ist, während der Anschluss 14 eine Referenzgröße Y_{ref} darstellt.

Der Umschalter 11 wird aktiviert, wenn ein Signal aus einem Vergleicher 15 ansteht, das über eine Leitung 16 auch auf ein UND-Gatter 17 gegeben wird. Der zweite Eingang 18 des UND-Gatters 17 liegt am Ausgang einer ODER-Verknüpfung 19, die über Leitungen 20, 21 an ihrem Eingang mit zwei Signalen beaufschlagt wird.

Das eine Signal kommt aus einem Spannungsvergleicher 22, während das andere Signal aus einem Stromvergleicher 23 kommt. Der Stromvergleicher 22 wird mit einem Strom beaufschlagt, der aus einem Stromwandler 24 kommt, der in einer Leitung 25 zwischen Heizungstransformator 7 und Graphitheizung 4 liegt. Der Spannungsvergleicher 22 wird dagegen mit der Spannung versorgt, die auch an der Graphitheizung 4 anliegt.

Dem UND-Gatter 17 nachgeschaltet ist ein Speicherglied 26, das aufgrund eines Ausgangssignals des UND-Gatters 17 zwischen zwei Zuständen hin- und hergeschaltet werden kann. Sein Ausgangssignal wird über eine Leitung 27 einem Alarmmelder 28 zugeführt. Mit 29 ist ein Schalter bezeichnet, der die Wechselspannungsquelle 5 an die Heizung 4 anlegt.

Die Funktionsweise der in der Figur dargestellten Anordnung ist folgende.

Wird der Schalter 29 geschlossen, liegt die Wechselspannung der Wechselspannungsquelle 5 an der Heizung 4 und heizt diese auf. Da die Heizung 4 zunächst kalt war, dauert es eine bestimmte Zeit, bis sich an der Heizung 4 eine Solltemperatur eingestellt hat. Während dieser Aufheizzeit ist der Regler 10 eingeschaltet, der die Ausgangsspannung am Thyristorsteller 6 solange vergrößert, bis die Temperatur Tᵢₛₜ der Heizung einem vorgegebenen Temperatur-Sollwert Tₛₒₗₗ entspricht.

Über den Temperaturfühler 9 wird die Ist-Temperatur der Heizung 4 fortwährend erfasst und dem Vergleicher 15 sowie dem Temperaturregler 10 zugeführt. Im Vergleicher 15 wird die Ist-Temperatur mit einer vorgegebenen Referenz-Temperatur verglichen. Ist diese Referenz-Temperatur erreicht, d. h. herrscht ein eingeschwungener Temperatur-Zustand, gibt der Vergleicher 15 ein Signal auf einen Eingang des UND-Gatters 17 und auf den Umschalter 11. Der Schalter 12 schaltet hierauf auf eine zuvor festgelegte Referenzgröße Y_{ref} um, die bewirkt, dass der Thyristorsteller 6 eine bestimmte Spannung an den Transformator 7 gibt.

Dieser Transformator 7 transformiert die vom Thyristorsteller 6 kommende Spannung auf einen bestimmten Spannungsbetrag herunter, der dem Spannungsvergleicher 22 zugeführt wird. In dem Spannungsvergleicher 22 wird die im eingeschwungenen Zustand auftretende Spannung mit einem Referenzwert U_{*ref*} verglichen, der bei der Inbetriebnahme der Anordnung gemäß der Figur ermittelt wurde. Es handelt sich hierbei also um einen Referenzwert, der die Spannung bei einer Neuanlage wiedergibt.

Auf entsprechende Weise wird der über die Leitung 8 fließende Strom mittels des Stromwandlers 24 erfasst und auf den Stromvergleicher 23 gegeben.

Mit dU bzw. dI sind Spannungs- bzw. Stromdifferenzen bezeichnet, die gerade noch zugelassen werden. Übersteigt die Differenz zwischen der Spannung einer Neuanlage U_{ref} und der Spannung der alten Anlage Uᵢₛₜ den vorgegebenen Wert dU, gibt der Spannungsvergleicher ein Signal auf die Leitung 20 ab.

In entsprechender Weise gibt der Stromvergleicher 23 ein Signal auf die Leitung 21 ab, wenn die Differenz zwischen dem Strom einer Neuanlage und dem Strom der alten Anlage einen bestimmten Wert dI übersteigt.

Gelangt wenigstens eines der Signale vom Spannungsvergleicher 22 oder vom Stromregler 23 auf das UND-Gatter 17, so schaltet dieses durch, wenn gleichzeitig ein Signal vom Vergleicher 15 ansteht, d. h. wenn die Ist-Temperatur Tᵢₛₜ der Heizung 4 gleich einer vorgegebenen Referenz-Temperatur T_{ref} ist.

Das Speicherelement 26, beispielsweise ein Flipflop, wird durch das Ausgangssignal des UND-Gatters in einen positiven Zustand versetzt und bewirkt hierdurch die Auslösung eines Signals bei der Einrichtung 28, sodass zur Überprüfung der Heizung bzw. zum Beginn des Services an der Heizung 4 aufgefordert wird. Um anzuzeigen, dass mit der Heizung 4 etwas nicht in Ordnung ist, muss sich also entweder die Ist-Spannung von der Referenzspannung oder der Ist-Strom von dem Referenzstrom um einen vorgegebenen Betrag unterscheiden.

Da der Differenzbetrag zwischen der Referenzspannung und der Ist-Spannung bzw. zwischen dem Referenzstrom und dem Ist-Strom einen bestimmten Wert übersteigen muss, ist es unerheblich, ob nun Uᵢₛₜ größer als U_{ref} oder U_{ref} größer als Uᵢₛₜ bzw. ob I_{ref} größer als Iᵢₛₜ oder Iᵢₛₜ größer als I_{ref} ist.

## Patentansprüche

1. Anordnung zum Erkennen von Störungen in einer elektrischen Heizung, die aus einer Wechselstromquelle gespeist wird, **gekennzeichnet durch**:
1.1 einen Regler (10), der die der Heizung (4) zugeführte elektrische Leistung nach dem Einschalten der Wechselstromquelle (5) solange hochregelt, bis sich an der Heizung (4) eine vorgegebene Temperatur (T_{ref}) eingestellt hat;
1.2 eine Einrichtung (11), der bei Vorliegen der vorgegebenen Temperatur (T_{ref}) die der Heizung (4) zugeführte elektrische Leistung auf einen konstanten Wert (Y_{ref}) einstellt, der zur vorgegebenen Temperatur (T_{ref}) korreliert; und
1.3 eine Einrichtung (17), die bei Vorliegen der vorgegebenen Temperatur (T_{ref}) und bei einer bestimmten Abweichung (dI, dU) des der Heizung (4) zugeführten Stroms (Iist) oder der der Heizung (4) zugeführten Spannung (Uᵢₛₜ) von einem vorgegebenen Strom (I_{ref}) oder einer vorgegebenen Spannung (U_{ref}) ein Warnsignal auslöst.

2. Anordnung nach Anspruch 1, **dadurch gekennzeichnet,** dass die Wechselstromquelle (5) über einen Thyristorsteller (6) mit einem Heizungstransformator (7) verbunden ist, der an der Heizung (4) liegt.

3. Anordnung nach Anspruch 1, **dadurch gekennzeichnet,** dass ein Temperaturfühler (9) vorgesehen ist, der die jeweilige Temperatur der Heizung (4) misst.

4. Anordnung nach Anspruch 3, **dadurch gekennzeichnet,** dass der Temperaturfühler (9) mit einem Vergleicher (15) verbunden ist, der die Ist-Temperatur (Tᵢₛₜ) der Heizung (4) mit einer vorgegebenen Referenz-Temperatur (T_{ref}) vergleicht und bei Gleichheit beider Temperaturen ein Signal abgibt.

5. Anordnung nach Anspruch 2, **dadurch gekennzeichnet,** dass der Thyristorsteller (6) in der Zeit, in welcher die Temperatur (Tᵢₛₜ) der Heizung (4) noch nicht ihren vorgegebenen Temperatur-Endwert (T_{ref}) erreicht hat, von einem Regler (10) geregelt wird.

6. Anordnung nach Anspruch 2, **dadurch gekennzeichnet,** dass der Thyristorsteller (6), nachdem die Heizung (4) ihren vorgegebenen Temperatur-Endwert (T_{ref}) erreicht hat, mit einem konstanten Wert (Y_{ref}) gesteuert wird.

7. Anordnung nach Anspruch 1, **dadurch gekennzeichnet,** dass ein Spannungsvergleicher (22) mit der Ausgangsspannung eines Transformators (7) verbunden ist und die von diesem abgegebene Spannung (Uᵢₛₜ) mit einer vorgegebenen Spannung (U_{ref}) vergleicht, und dann, wenn der Betrag der Differenz der beiden Spannungen (U_{ref}, Uᵢₛₜ) einen vorgegebenen Wert (dU) übersteigt, ein Signal auf ein ODER-Glied (19) gibt.

8. Anordnung nach Anspruch 1, **dadurch gekennzeichnet,** dass ein Stromvergleicher (23) mit einem Stromwandler (24) verbunden ist, der den Ausgangsstrom eines Transformators (7) erfasst, wobei der Stromvergleicher (23) den von dem Stromwandler (24) abgegebenen Strom (Iᵢₛₜ) mit einem vorgegebenen Strom (I_{ref}) vergleicht und dann, wenn der Betrag der Differenz der beiden Ströme (I_{ref}, Iᵢₛₜ) einen vorgegebenen Wert (dI) übersteigt, ein Signal an ein ODER-Glied (19) gibt.

9. Anordnung nach Anspruch 7 oder Anspruch 8, **dadurch gekennzeichnet,** dass der Ausgang des ODER-Glieds (19) mit einem Eingang eines UND-Gatters (17) verbunden ist.

10. Anordnung nach Anspruch 9, **dadurch gekennzeichnet,** dass das UND-Gatter (17) mit einem rücksetzbaren Speicher-Glied (26) verbunden ist, welches ein Alarm- oder Hinweissignal auslöst.

11. Anordnung nach Anspruch 1, **dadurch gekennzeichnet,** dass die Einrichtung (11) ein Umschalter (12) ist, der die Steuerelektrode eines Thyristorstellers (6) wahlweise mit dem Ausgang eines PID-Reglers (10) oder mit einer Festwertvorgabe (Iₛₒₗₗ) verbindet.
